# EUROPÄISCHE PATENTSCHRIFT

(11) **EP 4 101 312 B1**
(45) Veröffentlichungstag und Bekanntmachung des Hinweises auf die Patenterteilung: **02.07.2025**
(21) Anmeldenummer: 22172802.5
(22) Anmeldetag: 11.05.2022
(51) Int. Cl.: A21D 15/00, B65B 25/16, B65B 31/02, B65B 25/00

(54) **VERFAHREN UND VORRICHTUNG ZUR EVAKUIERUNG UND RÜCKBEGASUNG VON UNVERPACKTEN PRODUKTEN IN NUR EINER VAKUUMKAMMER ZUR STEIGERUNG DER PRODUKTIONSLEISTUNG BEI GLEICHZEITIGER ERHÖHUNG DER NACHHALTIGKEIT**
METHOD AND DEVICE FOR EVACUATING AND REGASSING UNPACKAGED PRODUCTS IN ONLY ONE VACUUM CHAMBER TO INCREASE PRODUCTION OUTPUT WHILE SIMULTANEOUSLY INCREASING SUSTAINABILITY
PROCÉDÉ ET DISPOSITIF D'ÉVACUATION ET DE RÉINJECTION DE GAZ DE PRODUITS NON EMBALLÉS DANS UNE SEULE CHAMBRE À VIDE POUR AUGMENTER LA PERFORMANCE DE PRODUCTION TOUT EN ACCROISSANT LA DURABILITÉ

(30) Priorität: 10.06.2021 DE 102021002977
(43) Veröffentlichungstag der Anmeldung: 14.12.2022
(73) Patentinhaber: Kaul, Dieter Albert, 88142 Wasserburg (DE)
(72) Erfinder: Kaul, Dieter Albert, 88142 Wasserburg (DE)
(74) Vertreter: Schmidt, Steffen

(56) Entgegenhaltungen:
- WO-A1-2004/045951
- DE-A1- 102007 060 305
- FR-A1- 2 405 020
- US-A- 4 324 107
- US-A- 4 417 837

## Beschreibung

Die Erfindung betrifft ein optimiertes Verfahren und eine optimierte Vorrichtung zur Evakuierung von Umgebungsluft und zur Rückbegasung mit Schutzgas von unverpackten Produkten nach dem Oberbegriff des Patentanspruches 1. Derartige Produkte sind insbesondere Produkte der Lebensmittelindustrie, die in einer schutzbegasten, sauerstoffarmen Atmosphäre verpackt werden sollen. Dazu gehören z.B. Teigwaren, Backwaren, Kuchen, Pizzen und allgemein jede Art von luftbehafteten Lebensmitteln.

Die Erfindung weicht in wesentlichen Merkmalen von dem auf mindestens zwei Vakuumkammern basierenden Patent DE 10 2007 060 305 desselben Erfinders ab.

So wird gemäß Patent DE 10 2007 060 305 der Produktstrom in Richtung Endverpackung (z.B. Verpackungsmaschine) aufrecht erhalten, dadurch dass mindestens zwei Vakuumkammern alternierend arbeiten. Gemäß Patent DE 10 2007 060 305 werden die ankommenden Produkte einzeln über die Einlaufwippe der jeweiligen Vakuumkammer zugeführt und dort aufgereiht. Das Be- und Entladen von mindestens zwei Kammern ist zeitaufwendig.

Das bekannte Verfahren aus dem Stand der Technik hat Nachteile aufgrund mehrerer Kammern (mindestens zwei) und dem damit verbundenen höheren Materialbedarf und höheren Herstellkosten. Weitere Nachteile der meist langen Kammern bestehen im größeren Raumbedarf. Weitere Nachteile der meist langen Kammern bestehen im höheren Reinigungsaufwand mit dem damit verbundenen Aus- und Einbau der langen und schweren Transportbänder, insbesondere wenn in der Lebensmittelindustrie hohe Reinigungsfrequenzen eingehalten werden müssen aufgrund empfindlicher und verderblicher Produkte.

Der Erfindung liegt deshalb die Aufgabe zugrunde, die aus dem Stand der Technik bekannten Vorrichtungen und Verfahren mit dem Ziel der Reduktion insbesondere von Raumbedarf, Materialbedarf, Herstellkosten, Gasverbrauch und Reinigungsaufwand zu verbessern.

Die Erfindung wird gelöst durch ein Verfahren nach Anspruch 1 sowie durch eine Vorrichtung nach Anspruch 15. Diese sind wie folgt definiert:
- Ein Verfahren zur Evakuierung von Umgebungsluft und Rückbegasung mit Schutzgas von unverpackten Produkten, z.B. Teigwaren oder luftbehaftete Lebensmittel, in nur einer Vakuumkammer, wobei eine oder mehrere Reihen von unbehandelten Produkten auf einem Einlaufband einlaufen, weitertransportiert werden auf ein Vorspeicherband, wo die Produkte gesammelt und aufgereiht werden, weitertransportiert werden auf ein erstes segmentiertes Speicherband, wo die Produkte angeordnet werden zu einer Produktformation mit definierten Abständen zueinander, um als geordnete Produktformation von einem ersten segmentierten Ausheber, der mittels Antrieb (7 a) von seiner Position unterhalb des segmentierten Speicherbandes durch vertikale Bewegung hochfährt, übernommen und mittels horizontaler Bewegung des ersten Aushebers in Produktlaufrichtung in die offene Vakuumkammer eingefahren und auf eine segmentierte Kammerauflage abgeladen zu werden, bevor der erste Ausheber rückwärts aus der Vakuumkammer ausfährt und sich erneut unter dem bereits wieder im Ladezyklus befindlichen ersten Speicherband positioniert, wodurch ein Kammerzyklus gestartet wird, indem die Vakuumkammer vorne und hinten dicht verschließt durch Abwärts- oder Seitwärtsbewegungen von vorderen und hinteren Verschlussplatten mittels Hubeinheiten in Verschlussplattengehäusen, bevor die Evakuierung und Rückbegasung der Produkte in der Vakuumkammer stattfindet und beendet ist, wenn sich die Vakuumkammer wieder öffnet, indem die vordere und hintere Verschlussplatte mittels Hubeinheit im Verschlussplattengehäuse auf- oder seitwärts fährt, damit ein zweiter segmentierter Ausheber aus einer Position unterhalb eines zweiten segmentierten Speicherbandes rückwärts gegen die Produktlaufrichtung in die offene Vakuumkammer unter die segmentierte Kammerauflage einfährt, dann hochfährt und dabei die behandelte Produktformation anhebt mittels Antrieb, um dann in einer oberen Stellung horizontal aus der offenen Vakuumkammer in Produktlaufrichtung auszufahren, sich über einem zweiten segmentierten Speicherband zu positionieren, sich mittels Antrieb abzusenken und dabei die Produktformation auf dem zweiten Speicherband abzulegen, welches die Produktformation an ein Auslaufband übergibt, wobei, während der zweite Ausheber die behandelte Produktformation ausfährt, der erste Ausheber die nächste unbehandelte Produktformation in die Vakuumkammer einfährt, so dass ein kontinuierlicher Produktfluss vom Produkteinlauf bis zum Produktauslauf gewährleistet ist unter Verwendung nur einer Vakuumkammer zur Behandlung der Produkte, bevor die behandelte Produktformation geordnet und definiert einer Endverpackung übergeben wird. ; und:
- Eine Vorrichtung zur Evakuierung von Umgebungsluft und Rückbegasung mit Schutzgas von unverpackten Produkten, z.B. Teigwaren oder luftbehaftete Lebensmittel, mit nur einer Vakuumkammer, wobei die Vorrichtung Folgendes aufweist:ein Einlaufband, ein Vorspeicherband, ein erstes segmentiertes Speicherband, einen ersten segmentierten Ausheber, eine Vakuumkammer, eine segmentierte Kammerauflage, vordere und hintere Verschlussplatten, welche mittels Hubeinheiten in Verschlussplattengehäusen eingerichtet sind, um die Vakuumkammer vorne und hinten dicht zu verschließen, einen zweiten segmentierten Ausheber, ein zweites segmentiertes Speicherband und ein Auslaufband, wobei die Vorrichtung eingerichtet ist, um das Verfahren auszuführen.

Gemäß einer Besonderheit der Erfindung beginnt die Aufreihung, Ausrichtung und Gruppierung von Produkten bereits vor der Vakuumkammer, auf dem Vorspeicherband und insbesondere auf dem Speicherband, indem eine oder mehrere Reihen von unbehandeltem Produkt aufgenommen und zu einer geordneten Produktformation mit definierten Abständen zueinander angeordnet werden, die dann als ganze Produkteinheit der Vakuumkammer zugeführt wird, mittels besonders konstruierter Vorrichtungen wie segmentiertem Speicherband und segmentiertem Ausheber mit Antrieb. Die Segmentierung ermöglicht ein Ineinandergreifen der Vorrichtungen mit fließenden Produktübernahmen und ist besonders zeiteffizient. Auch für das Ineinandergreifen von segmentierten Aushebern und der segmentierten Kammerauflage in der Vakuumkammer gilt der Vorteil der fließenden Produktübernahme und Zeiteffizienz.

Die Erfindung kommt mit nur einer Vakuumkammer aus, die vergleichsweise kurz und kompakt gebaut werden kann. Materialbedarf und Herstellkosten reduzieren sich, ebenso der Raumbedarf.

Da die Erfindung mit besonderen Vorrichtungen und Methoden arbeitet, auch in der Vakuumkammer, sind in der Kammer selbst keine Transportbänder vorgesehen, folglich erübrigt sich deren Ein- und Ausbau zu Reinigungszwecken. Die mehr oder weniger leere Vakuumkammer kann einfach, schnell und kosteneffizient gereinigt werden und kommt damit den grundsätzlichen Anforderungen in der Lebensmittelindustrie besonders entgegen.

Die definierte Produktformation sorgt dafür, dass ein laufender Produktstrom auf dem Einlaufband und dem Auslaufband aufrechterhalten werden kann. Gemäß bevorzugten Ausführungsformen werden dazu in der definierten Produktformation die Produkte so angeordnet, dass der Abstand entlang der Förderrichtung zwischen den Produkten verringert wird im Vergleich zu den einlaufenden Produkten. Alternativ oder zusätzlich können auch mehr Reihen gebildet werden, in denen die Produkte angeordnet sind. In jedem Fall kann dadurch die Anzahl der Produkte pro Längeneinheit entlang der Produktlaufrichtung erhöht werden, so dass der kontinuierliche Produktstrom trotz des diskontinuierlichen Ein- und Ausschleusens in der Vakuumkammer aufrechterhalten werden kann.

Im Folgenden wird die Erfindung anhand von lediglich einen Ausführungsweg darstellenden Zeichnungen näher erläutert. Hierbei gehen aus den Zeichnungen und ihrer Beschreibung weitere Merkmale und Vorteile der Erfindung hervor.

Es zeigen:

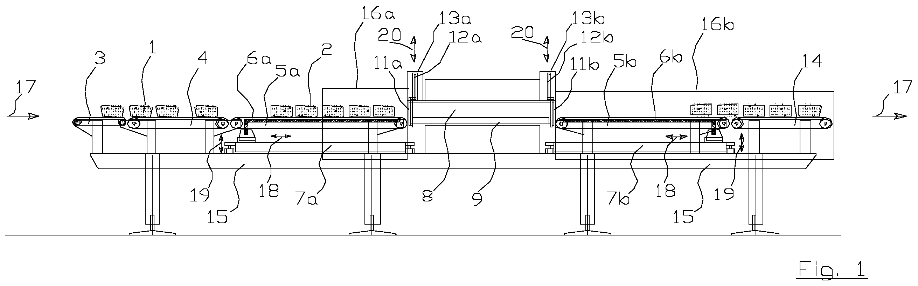

- Fig. 1: schematisiert eine Vorrichtung zur Evakuierung und Rückbegasung von Produkten gemäß einer Ausführungsform der Erfindung in Seitenansicht in einem bestimmten Verfahrensschritt,

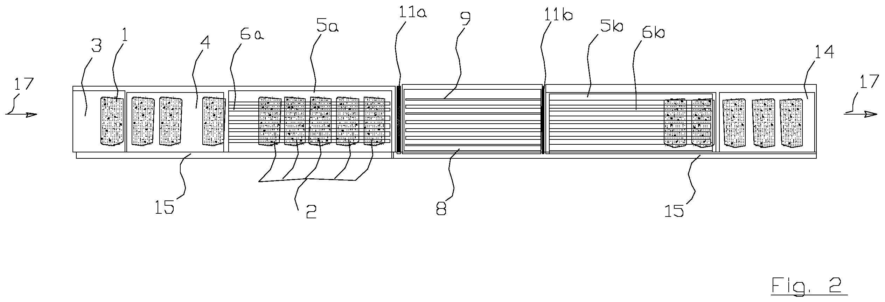

- Fig.2: eine Draufsicht auf die Vorrichtung nach Fig. 1,

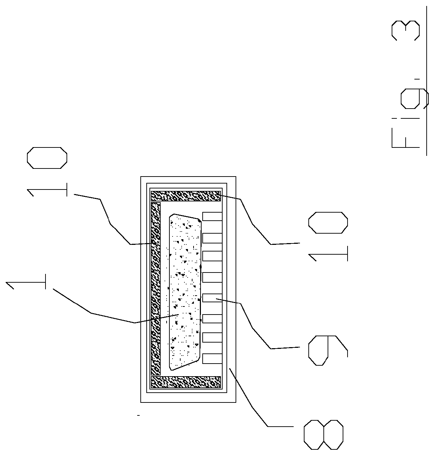

- Fig. 3: einen Schnitt durch die Vakuumkammer der Vorrichtung nach Fig. 1, und

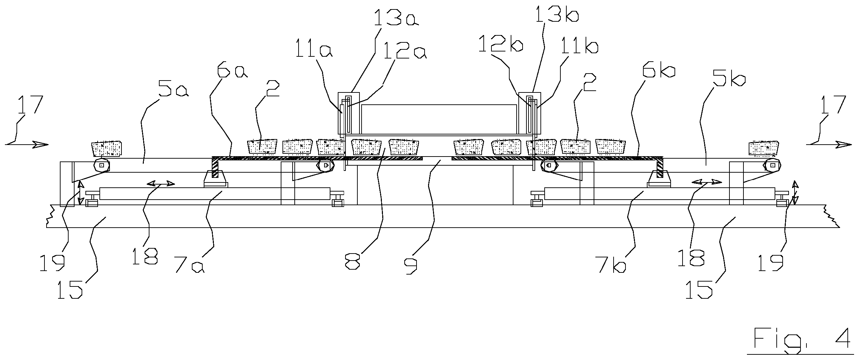

- Fig. 4: eine Teilansicht des Lade- und Entladezyklus der Vorrichtung nach Fig. 1 in Seitenansicht.

Es laufen folgende Verfahrensschritte ab:
1. Unbehandeltes Produkt 1 wird mittels Einlaufband 3 auf einem Vorspeicherband 4 gesammelt und vorsortiert.
2. Die Produkte 1 werden weiter auf ein segmentiertes Speicherband 5a verbracht und dort zu einer geordneten Produktformation 2 mit definierten Abständen zueinander angeordnet und ausgerichtet.
3. Ist die Produktformation 2 vollständig erfolgt Freigabe Ausheber 6a.
4. *Freigabe Beladung* erfolgt, wenn der segmentierte Ausheber 6b horizontal in Produktlaufrichtung aus der offenen Vakuumkammer 8 ausfährt.
5. Die Produktformation 2 wird von dem segmentierten Ausheber 6a übernommen, der mittels Antrieb 7a von seiner Position unterhalb des Speicherbandes 5a durch vertikale Bewegung hochfährt 19.
6. Die Produktformation 2 wird mittels horizontaler Bewegung 18 des Aushebers 6a in Produktlaufrichtung 17 in die offene Vakuumkammer 8 eingefahren.
7. Die Produktformation 2 wird auf der Kammerauflage 9 abgeladen, indem der Ausheber 6a abfährt 19.
8. Der Ausheber 6a fährt rückwärts 18 aus der Vakuumkammer 8 aus.
9. Der Ausheber 6a positioniert sich erneut unter dem bereits wieder im Ladezyklus befindlichen Speicherband 5a.
10. Der Kammerzyklus wird gestartet:
11. Die Vakuumkammer 8 schließt dicht durch Abwärtsbewegung 20 der vorderen und hinteren Verschlussplatte 11a/b mittels Hubeinheit 12a/b.
12. Die Evakuierung und Rückbegasung (Behandlung der Produkte) in der Vakuumkammer 8 startet und läuft.
13. Der Kammerzyklus endet:
14. Die Vakuumkammer 8 öffnet, indem die vordere und hintere Verschlussplatte 11a/b mittels Hubeinheit 12a/b auffährt.
15. Der Ausheber 6b fährt aus seiner Position unterhalb des Speicherbandes 5b gegen die Produktlaufrichtung 17 in die offene Vakuumkammer 8 ein, unter die Kammerauflage 9.
16. Der Ausheber 6b fährt hoch 19 und übernimmt die behandelte Produktformation 2.
17. Der Ausheber 6b fährt in der oberen Stellung horizontal 18 und in Produktlaufrichtung 17 aus der offenen Vakuumkammer 8 aus.
18. Zeitgleich zu 17. erfolgt die Freigabe Beladung zur Einbringung der nächsten unbehandelten Produktformation 2 in die Vakuumkammer 8.
19. Der Ausheber 6a startet erneut mit Verfahrensschritt 5 .
20. Der Ausheber 6b verfährt die Produktformation 2 über das Speicherband 5b, senkt ab 19 und übergibt die Produktformation 2 dabei an das Speicherband 5b.
21. Das Speicherband 5b verfährt die aufgenommene behandelte Produktformation 2 an das Auslaufband 14 und übergibt sie.
22. Das Auslaufband 14 führt die behandelten Produkte geordnet und definiert der Endverpackung (z.B. Verpackungsmaschine) zu.

Die Merkmale der Vorrichtung zum Evakuieren und Rückbegasen von unverpackten Produkten ergeben sich unmittelbar aus den vorhergehend beschriebenen Verfahrensschritten, weil die Vorrichtung dazu eingerichtet ist, alle der genannten Verfahrensschritte automatisch durchzuführen.

Vorhergehend wurden das vordere und das hintere Speicherband 5a/b, der vordere und hintere Ausheber 6a/b sowie die Kammerauflage 9 als segmentierte Einheiten beschrieben. Die segmentierten Einheiten können aus in Längsrichtung gebildeten Segmenten bestehen, die über Spalte ineinandergreifen können. Das heißt, der Ausheber greift mit Längssegmenten in Spalte zwischen den Längssegmenten des Speicherbands sowie in Spalte zwischen den Längssegmenten der Kammerauflage 9 ein. Alternativ können auch geschlossene Transportsysteme, wie z.B. Bänder, Riemen oder Gurte vorgesehen sein, um die Produkte bzw. die Produktformation aufzunehmen, zu speichern, weiter zu transportieren oder abzugeben. Der Vorteil der Längssegmente besteht darin, dass die Längssegmente starr miteinander verbunden sind und dadurch leichter gereinigt werden können.

Die Vorrichtung zur Evakuierung und Rückbegasung der Produkte weist vorzugsweise im Bereich hinter der Vakuumkammer und optional auch vor der Vakuumkammer eine Einhausung 16b/a auf, in welcher die Produkte mit Schutzgas gespült werden können. Die hintere Einhausung 16b verhindert dadurch, dass die Produkte nach Verlassen der Vakuumkammer wieder mit Luft kontaminiert werden, bevor sie einer Endverpackung zugeführt werden. Die Einhausung 16a in Produktlaufrichtung vor der Vakuumkammer dient dazu, dass bereits Umgebungsluft an den Produkten 1 verdrängt wird, noch bevor diese in die Vakuumkammer 8 eingefahren werden. Dadurch lässt sich die Effizienz, mit welcher die Produkte von Luft befreit werden, erhöhen bzw. die Zeit, welche zum Evakuieren in der Vakuumkammer notwendig ist, verringern. Der wesentliche Zeitgewinn wird gemäß der vorliegenden Erfindung jedoch dadurch erzielt, dass die Dichte der Produkte 1 vor dem Einlaufen in die Vakuumkammer 8 erhöht wird durch die definierte Produktanordnung auf dem vorderen Speicherband 5a, so dass mit einem Verfahrenszyklus zum Einfahren, Evakuieren, Rückbegasen und Ausfahren der Produkte aus der Vakuumkammer soviel Produkte verarbeitet werden können, wie innerhalb dieses Produktzyklus auf dem Einlaufband 3 der Vorrichtung zugeführt werden. Dadurch kann ein laufender Produktstrom aufrechterhalten werden. Erfindungsgemäß ist es dazu jedoch nicht mehr notwendig, den Produktstrom auf mehrere verschiedene Vakuumkammern aufzuteilen.

Alle in der Anmeldung offenbarten Angaben und Merkmale, insbesondere die in Zeichnungen dargestellte räumliche Ausbildung, bilden Merkmale, welche einzeln oder in Kombination zur Ausgestaltung von bevorzugten Ausführungsformen der Erfindung dienen können.

### Bezugszeichenliste

- 1: Produkt
- 2: Produktformation
- 3: Einlaufband
- 4: Vorspeicherband
- 5a/b: erstes/zweites (vorderes/hinteres) Speicherband
- 6a/b: erster/zweiter (vorderer/hinterer) Ausheber
- 7a/b: erster/zweiter (vorderer/hinterer) Antrieb Ausheber
- 8: Vakuumkammer
- 9: Kammerauflage
- 10: Einschubkörper
- 11a/b: erste/zweite (vordere/hintere) Verschlussplatte
- 12a/b: erste/zweite (vordere/hintere) Hubeinheit
- 13a/b: erstes/zweites (vorderes/hinteres) Verschlussplattengehäuse
- 14: Auslaufband
- 15: Untergestell
- 16a/b: erste/zweite (vordere/hintere) Einhausung
- 17: Produktlaufrichtung horizontal
- 18: Ausheber Bewegungsrichtung horizontal
- 19: Ausheber Bewegungsrichtung vertikal
- 20: Verschlussplatte Bewegungsrichtung vertikal

## Patentansprüche

1. Verfahren zur Evakuierung von Umgebungsluft und Rückbegasung mit Schutzgas von unverpackten Produkten (1), z.B. Teigwaren oder luftbehaftete Lebensmittel, in nur einer Vakuumkammer (8), wobei eine oder mehrere Reihen von unbehandelten Produkten (1) auf einem Einlaufband (3) einlaufen, weitertransportiert werden auf ein Vorspeicherband (4), wo die Produkte (1) gesammelt und aufgereiht werden, weitertransportiert werden auf ein erstes segmentiertes Speicherband (5a), wo die Produkte (1) angeordnet werden zu einer Produktformation mit definierten Abständen zueinander, um als geordnete Produktformation (2) von einem ersten segmentierten Ausheber (6a), der mittels Antrieb (7a) von seiner Position unterhalb des segmentierten Speicherbandes (5a) durch vertikale Bewegung hochfährt (19), übernommen und mittels horizontaler Bewegung (18) des ersten Aushebers (6a) in Produktlaufrichtung (17) in die offene Vakuumkammer (8) eingefahren und auf eine segmentierte Kammerauflage (9) abgeladen zu werden, bevor der erste Ausheber (6a) rückwärts (18) aus der Vakuumkammer (8) ausfährt und sich erneut unter dem bereits wieder im Ladezyklus befindlichen ersten Speicherband (5a) positioniert, wodurch ein Kammerzyklus gestartet wird, indem die Vakuumkammer (8) vorne und hinten dicht verschließt durch Abwärts- oder Seitwärtsbewegungen (20) von vorderen und hinteren Verschlussplatten (11a/b) mittels Hubeinheiten (12a/b) in Verschlussplattengehäusen (13a/b), bevor die Evakuierung und Rückbegasung der Produkte in der Vakuumkammer (8) stattfindet und beendet ist, wenn sich die Vakuumkammer (8) wieder öffnet, indem die vordere und hintere Verschlussplatte (11a/b) mittels Hubeinheit (12a/b) im Verschlussplattengehäuse (13a/b) auf- oder seitwärts fährt (20), damit ein zweiter segmentierter Ausheber (6b) aus einer Position unterhalb eines zweiten segmentierten Speicherbandes (5b) rückwärts (18) gegen die Produktlaufrichtung (17) in die offene Vakuumkammer (8) unter die segmentierte Kammerauflage (9) einfährt, dann hochfährt (19) und dabei die behandelte Produktformation (2) anhebt mittels Antrieb (7b), um dann in einer oberen Stellung horizontal (18) aus der offenen Vakuumkammer (8) in Produktlaufrichtung (17) auszufahren, sich über einem zweiten segmentierten Speicherband (5b) zu positionieren, sich mittels Antrieb (7b) abzusenken (19) und dabei die Produktformation (2) auf dem zweiten Speicherband (5b) abzulegen, welches die Produktformation (2) an ein Auslaufband (14) übergibt, wobei, während der zweite Ausheber (6b) die behandelte Produktformation (2) ausfährt, der erste Ausheber (6a) die nächste unbehandelte Produktformation (2) in die Vakuumkammer (8) einfährt, so dass ein kontinuierlicher Produktfluss vom Produkteinlauf bis zum Produktauslauf gewährleistet ist unter Verwendung nur einer Vakuumkammer (8) zur Behandlung der Produkte (1), bevor die behandelte Produktformation (2) geordnet und definiert einer Endverpackung übergeben wird.

2. Verfahren nach Anspruch 1, **dadurch gekennzeichnet, dass** das erste und/oder zweite Speicherband (5a/b) mehrere Segmente umfasst, die parallel in Längsrichtung und mit Abstand zueinander angeordnet sind, so dass eine Auflagefläche für die Produktformation (2) teilweise offen gestaltet ist, um dem Ausheber (6a/b) eine Aktion zu ermöglichen in Form eines Einschubs von festen Längselementen des Aushebers in Spalte des Speicherbandes (5a/b), um die Produktformation (2) vom Speicherband (5a) zu übernehmen oder auf das Speicherband (5b) zu übergeben.

3. Verfahren nach einem der vorhergehenden Ansprüche, **dadurch gekennzeichnet, dass** der Ausheber (6a/b) mehrere Segmente umfasst, die parallel in Längsrichtung und mit Abstand zueinander angeordnet sind und mit einem Versatz im Hinblick auf das Speicherband (5a/b) und die Kammerauflage (9), so dass die Auflagefläche für die Produktformation (2) teilweise offen gestaltet ist, damit der Ausheber (6a/b) mit seinen festen Längselementen in Spalte des Speicherbandes (5a/b) oder der Kammerauflage (9) einfahren kann, um die Produktformation (2) zu übernehmen oder zu übergeben.

4. Verfahren nach einem der vorhergehenden Ansprüche, **dadurch gekennzeichnet, dass** die Kammerauflage (9) in der Vakuumkammer (8) mehrere Segmente umfasst, die parallel in Längsrichtung und mit Abstand zueinander angeordnet sind und mit einem Versatz im Hinblick auf den ersten und/oder zweiten Ausheber (6a/b), so dass die Auflagefläche für die Produktformation (2) teilweise offen gestaltet ist, um dem ersten und/oder zweiten Ausheber (6a/b) eine Aktion zu ermöglichen in Form eines Einschubs seiner festen Längselemente in Spalte der Kammerauflage (9), um die Produktformation (2) zu übergeben oder zu übernehmen.

5. Verfahren nach einem der vorhergehenden Ansprüche, **dadurch gekennzeichnet, dass** in der Vakuumkammer (8) keine Teile enthalten sind, die zur Reinigung ausgebaut werden müssen.

6. Verfahren nach Anspruch 1, **dadurch gekennzeichnet, dass** eine vordere Einhausung (16a) und eine hintere Einhausung (16b) angebracht werden kann, welche dazu dient, Umgebungsluft zu minimieren und/oder ausströmende Gase im Bereich der Vakuumkammer (8) abzusaugen, z.B. mittels einer Absauganlage.

7. Verfahren nach Anspruch 1, **dadurch gekennzeichnet, dass** die Vakuumkammer (8) durch eine besondere Vorrichtung temperiert wird, um z.B. einer Kondenswasserbildung bei warmen Produkten entgegen zu wirken.

8. Verfahren nach Anspruch 1, **dadurch gekennzeichnet, dass** ein Raumvolumen der Vakuumkammer (8) durch das Einführen von einem oder mehreren Einschubkörpern (10) reduziert wird, um ein Luftvolumen für Evakuierung und Rückbegasung gegenüber dem Raumvolumen der Vakuumkammer ohne den Einschubkörper zu reduzieren.

9. Verfahren nach Anspruch 8, **dadurch gekennzeichnet, dass** der oder die Einschubkörper (10) auswechselbar ist/sind und in unterschiedlichen Abmessungen einsetzbar ist/sind, um das Raumvolumen der Vakuumkammer (8) an unterschiedliche Produkte (1) und Produktformationen (2) anzupassen.

10. Verfahren nach einem der Ansprüche 1 oder 5 bis 10, **dadurch gekennzeichnet, dass** der oder wenigstens einer der Einschubkörper (10) ausdehnbar ist und ein regelbares definiertes Volumen einnehmen kann.

11. Verfahren nach einem der Ansprüche 1 oder 5 bis 10, **dadurch gekennzeichnet, dass** das erste und zweite Speicherband (5a/b), der erste und zweite Ausheber (6a/b) und/oder die Kammerauflage (9) als geschlossene Transportsysteme, z.B. als Bänder, Riemen oder Gurte, installiert sind, um die Produkte (1) und/oder Produktformation (2) aufzunehmen, zu speichern, zu transportieren und/oder abzugeben.

12. Verfahren nach einem der vorhergehenden Ansprüche, wobei die Produkte (1) in der definierten Produktformation (2) einen definierten Abstand in Richtung der horizontalen Produktlaufrichtung (17) aufweisen, welcher geringer ist als ein mittlerer Abstand der Produkte (1) auf dem Einlaufband (3).

13. Verfahren nach einem der vorhergehenden Ansprüche, wobei das Vorspeicherband (4) dazu eingerichtet ist, die Produkte (1) vom Einlaufband (3) in eine Richtung quer zur Produktlaufrichtung (17) aufzuteilen, so dass die definierte Produktformation (2) mehr Reihen von Produkten (1) parallel zur Produktlaufrichtung (17) aufweist als die maximale Anzahl von Reihen von Produkten (1) auf dem Einlaufband (3).

14. Verfahren nach einem der vorhergehenden Ansprüche, wobei die aus der Vakuumkammer (8) herausbeförderten Produkte (1) laufend mit einem Schutzgas, z.B. dem gleichen Schutzgas, mit welchem die Produkte (1) in der Vakuumkammer rückbegast werden, innerhalb einer Einhausung (16b) umspült werden.

15. Vorrichtung zur Evakuierung von Umgebungsluft und Rückbegasung mit Schutzgas von unverpackten Produkten (1), z.B. Teigwaren oder luftbehaftete Lebensmittel, mit nur einer Vakuumkammer, wobei die Vorrichtung Folgendes aufweist:
ein Einlaufband (3), ein Vorspeicherband (4), ein erstes segmentiertes Speicherband (5a), einen ersten segmentierten Ausheber (6a), eine Vakuumkammer (8), eine segmentierte Kammerauflage (9), vordere und hintere Verschlussplatten (11a/11b), welche mittels Hubeinheiten (12a/12b) in Verschlussplattengehäusen (13a, 13b) eingerichtet sind, um die Vakuumkammer (8) vorne und hinten dicht zu verschließen, einen zweiten segmentierten Ausheber (6b), ein zweites segmentiertes Speicherband (5b) und ein Auslaufband (14),
wobei die Vorrichtung eingerichtet ist, um das Verfahren nach einem der vorhergehenden Ansprüche auszuführen.

## Claims

1. Method for evacuating ambient air and back-gassing with protective gas of unpackaged products (1), e.g. pasta or food stuffed with air, in only one vacuum chamber (8), wherein one or more rows of untreated products (1) run in on an infeed belt (3), are transported further onto a pre-storage belt (4), where the products (1) are collected and lined up, are transported further onto a first segmented storage belt (5a), where the products (1) are arranged to a product formation with defined distances from one another, in order to be taken over as an ordered product formation (2) by a first segmented lifter (6a), which by means of a drive (7a) moves up (19) from its position below the segmented storage belt (5a) by vertical movement, and by means of a horizontal movement (18) of the first lifter (6a) in the product running direction (17) to be moved into the open vacuum chamber (8) and unloaded onto a segmented chamber support (9), before the first lifter (6a) moves out of the vacuum chamber (8) backwards (18) and positions itself again under the first storage belt (5a) already located again in the loading cycle, whereby a chamber cycle is started, in that the vacuum chamber (8) closes tightly at the front and rear by downward or sideways movements (20) of front and rear closure plates (11a/b) by means of lifting units (12a/b) in closure plate housings (13a/b), before the evacuation and back-gassing of the products in the vacuum chamber (8) takes place and is ended when the vacuum chamber (8) opens again, in that the front and rear closure plate (11a/b) by means of lifting unit (12a/b) moves up or sideways (20) in the closure plate housing (13a/b), so that a second segmented lifter (6b) moves from a position below a second segmented storage belt (5b) backwards (18) against the product running direction (17) into the open vacuum chamber (8) under the segmented chamber support (9), then moves up (19) and in the process lifts the treated product formation (2) by means of a drive (7b), in order then in an upper position to extend horizontally (18) out of the open vacuum chamber (8) in the product running direction (17), to position itself above a second segmented storage belt (5b), to lower (19) itself by means of a drive (7b) and in the process deposit the product formation (2) on the second storage belt (5b), which transfers the product formation (2) to an outfeed belt (14), wherein while the second lifter (6b) moves out of the treated product formation (2), the first lifter (6a) moves the next untreated product formation (2) into the vacuum chamber (8), so that a continuous product flow from the product infeed to the product outfeed is ensured using only one vacuum chamber (8) for treating the products (1), before the treated product formation (2) is transferred in an ordered and defined manner to an end packaging.

2. Method according to claim 1, **characterized in that** the first and/or second storage belt (5a/b) comprises a plurality of segments which are arranged parallel in the longitudinal direction and at a distance from one another, so that a support surface for the product formation (2) is designed to be partially open in order to allow the lifter (6a/b) an action in the form of an insertion of fixed longitudinal elements of the lifter into columns of the storage belt (5a/b) in order to take over the product formation (2) from the storage belt (5a) or transfer it to the storage belt (5b).

3. Method according to one of the preceding claims, **characterized in that** the lifter (6a/b) comprises a plurality of segments which are arranged parallel in the longitudinal direction and at a distance from one another and with an offset with respect to the storage belt (5a/b) and the chamber support (9), so that the support surface for the product formation (2) is designed to be partially open so that the lifter (6a/b) can move with its fixed longitudinal elements into columns of the storage belt (5a/b) or the chamber support (9) in order to take over or transfer the product formation (2).

4. Method according to one of the preceding claims, **characterized in that** the chamber support (9) in the vacuum chamber (8) comprises a plurality of segments which are arranged parallel in the longitudinal direction and at a distance from one another and with an offset with respect to the first and/or second lifter (6a/b), so that the support surface for the product formation (2) is designed to be partially open in order to allow the first and/or second lifter (6a/b) an action in the form of an insertion of its fixed longitudinal elements into columns of the chamber support (9) in order to transfer or take over the product formation (2).

5. Method according to one of the preceding claims, **characterized in that** no parts which have to be removed for cleaning are contained in the vacuum chamber (8).

6. Method according to claim 1, **characterized in that** a front housing (16a) and a rear housing (16b) can be attached which serves to minimise ambient air and/or to suck out outflowing gases in the region of the vacuum chamber (8), e.g. by means of a suction system.

7. Method according to claim 1, **characterized in that** the vacuum chamber (8) is tempered by a special device in order to counteract e.g. condensation water formation in the case of warm products.

8. Method according to claim 1, **characterized in that** a spatial volume of the vacuum chamber (8) is reduced by the introduction of one or more insertion bodies (10) in order to reduce an air volume for evacuation and back gassing compared with the spatial volume of the vacuum chamber without the insertion body.

9. Method according to claim 8, **characterized in that** the insertion body or bodies (10) is/are interchangeable and can be inserted in different dimensions in order to adapt the spatial volume of the vacuum chamber (8) to different products (1) and product formations (2).

10. Method according to one of claims 1 or 5 to 10, **characterized in that** the insertion body or at least one of the insertion bodies (10) is expandable and can occupy a controllable defined volume.

11. Method according to one of claims 1 or 5 to 10, **characterized in that** the first and second storage belt (5a/b), the first and second lifter (6a/b) ,and/or the chamber support (9) are installed as closed transport systems, e.g. as belts, laces or straps, in order to receive, store, transport and/or dispense the products (1) and/or product formation (2).

12. Method according to one of the preceding claims, wherein the products (1) in the defined product formation (2) have a defined spacing in the direction of the horizontal product running direction (17) which is smaller than an average spacing of the products (1) on the infeed belt (3).

13. Method according to one of the preceding claims, wherein the pre-storage belt (4) is configured to divide the products (1) from the infeed belt (3) in a direction transverse to the product running direction (17) so that the defined product formation (2) has more rows of products (1) parallel to the product running direction (17) than the maximum number of rows of products (1) on the infeed belt (3).

14. Method according to one of the preceding claims, wherein the products (1) conveyed out of the vacuum chamber (8) are continuously flushed within a housing (16b) with a protective gas, e.g. the same protective gas with which the products (1) are back-gassed in the vacuum chamber.

15. Device for evacuating ambient air and back gassing with protective gas of unpackaged products (1), e.g. pasta or food stuffed with air, with only one vacuum chamber, wherein the device has the following:
an infeed belt (3), a pre-storage belt (4), a first segmented storage belt (5a), a first segmented lifter (6a), a vacuum chamber (8), a segmented chamber support (9), front and rear closure plates (11a/11b) which are configured by means of lifting units (12a/12b) in closure plate housings (13a, 13b) in order to tightly close the vacuum chamber (8) at the front and rear, a second segmented lifter (6b), a second segmented storage belt (5b) and an outfeed belt (14), wherein the device is configured to carry out the method according to one of the preceding claims.

## Revendications

1. Procédé d'évacuation de l'air ambiant et de regazage avec un gaz protecteur de produits (1) non emballés, par exemple des pâtes ou des aliments exposés à l'air, dans une seule chambre à vide (8), dans lequel une ou plusieurs rangées de produits (1) non traités entrent sur une bande d'entrée (3), sont transportées sur une bande de pré-stockage (4), où les produits (1) sont rassemblés et alignés, sont transportées sur une première bande de stockage segmentée (5a), où les produits (1) sont disposés en une formation de produits à des distances définies les uns des autres, pour être repris en tant que formation de produits ordonnée (2) par un premier dispositif de levage segmenté (6a), qui monte (19) au moyen d'un entraînement (7a) depuis sa position au-dessous de la bande de stockage segmentée (5a) par un mouvement vertical, et être introduits dans la chambre à vide ouverte (8) au moyen d'un mouvement horizontal (18) du premier dispositif de levage (6a) dans la direction de déplacement de produits (17) et être déchargés sur un support de chambre segmenté (9), avant que le premier dispositif de levage (6a) ne sorte de la chambre à vide (8) en marche arrière (18) et se positionne à nouveau sous la première bande de stockage (5a) se trouvant à nouveau en cycle de chargement, ce par quoi un cycle de chambre est démarré en fermant la chambre à vide (8) de manière étanche à l'avant et à l'arrière par des mouvements vers le bas ou vers le côté (20) de panneaux de fermeture avant et arrière (11a/b) au moyen d'unités de levage (12a/b) dans des boîtiers de panneaux de fermeture (13a/b), avant que l'évacuation et le regazage des produits n'aient lieu dans la chambre à vide (8) et soient terminés lorsque la chambre à vide (8) s'ouvre à nouveau, en ce que le panneau de fermeture avant et arrière (11a/b) monte (20) vers le haut ou vers le côté au moyen d'une unité de levage (12a/b) dans le boîtier de panneau de fermeture (13a/b), afin qu'un deuxième dispositif de levage segmenté (6b) rentre dans la chambre à vide ouverte (8) au-dessous du support de chambre segmenté (9) à partir d'une position au-dessous d'une deuxième bande de stockage segmentée (5b) en marche arrière (18) dans la direction opposée de déplacement de produits (17), puis monte (19) et en même temps soulève la formation de produits traitée (2) au moyen d'un entraînement (7b), pour ensuite sortir de la chambre à vide ouverte (8) horizontalement dans une position supérieure (18) dans la direction de déplacement de produits (17), se positionner au-dessus d'une deuxième bande de stockage segmentée (5b), s'abaisser (19) au moyen d'un entraînement (7b) et déposer en même temps la formation de produits (2) sur la deuxième bande de stockage (5b), qui transfère la formation de produits (2) à une bande de sortie (14), dans lequel, pendant que le deuxième dispositif de levage (6b) sort de la formation de produits traitée (2), le premier dispositif de levage (6a) introduit la formation de produits non traitée suivante (2) dans la chambre à vide (8), de sorte qu'un flux de produits continu de l'entrée de produits jusqu'à la sortie de produits est garanti en utilisant seulement une chambre à vide (8) pour le traitement des produits (1), avant que la formation de produits traitée (2) soit transférée à un emballage final de manière ordonnée et définie.

2. Procédé selon la revendication 1, **caractérisé en ce que** la première et/ou la deuxième bande de stockage (5a/b) comprend une pluralité de segments qui sont disposés parallèlement dans la direction longitudinale et à distance les uns des autres, de sorte qu'une surface portante pour la formation de produits (2) est partiellement ouverte, afin de permettre au dispositif de levage (6a/b) une action sous la forme d'une insertion d'éléments longitudinaux fixes du dispositif de levage dans des fentes de la bande de stockage (5a/b), afin de reprendre la formation de produits (2) de la bande de stockage (5a) ou de la transférer à la bande de stockage (5b).

3. Procédé selon l'une quelconque des revendications précédentes, **caractérisé en ce que** le dispositif de levage (6a/b) comprend une pluralité de segments qui sont disposés parallèlement dans la direction longitudinale et à distance les uns des autres et avec un décalage par rapport à la bande de stockage (5a/b) et au support de chambre (9), de sorte que la surface portante pour la formation de produits (2) est partiellement ouverte, afin que le dispositif de levage (6a/b) puisse entrer avec ses éléments longitudinaux fixes dans des fentes de la bande de stockage (5a/b) ou du support de chambre (9), afin de reprendre ou de transférer la formation de produits (2).

4. Procédé selon l'une quelconque des revendications précédentes, **caractérisé en ce que** le support de chambre (9) dans la chambre à vide (8) comprend plusieurs segments qui sont disposés parallèlement dans la direction longitudinale et à distance les uns des autres et avec un décalage par rapport au premier et/ou au deuxième dispositif de levage (6a/b), de sorte que la surface portante pour la formation de produits (2) est partiellement ouverte, afin de permettre au premier et/ou au deuxième dispositif de levage (6a/b) une action sous la forme d'une insertion de ses éléments longitudinaux fixes dans des fentes du support de chambre (9), afin de transférer ou de reprendre la formation de produits (2).

5. Procédé selon l'une quelconque des revendications précédentes, **caractérisé en ce que** la chambre à vide (8) ne contient aucuns éléments qui doivent être démontés pour être nettoyés.

6. Procédé selon la revendication 1, **caractérisé en ce qu'**une enceinte avant (16a) et une enceinte arrière (16b) peuvent être montées, laquelle sert à minimiser l'air ambiant et/ou à aspirer les gaz qui s'échappent dans les environs de la chambre à vide (8), par exemple au moyen d'une installation d'aspiration.

7. Procédé selon la revendication 1, **caractérisé en ce que** la chambre à vide (8) est régulée en température par un dispositif particulier afin d'éviter par exemple la formation d'eau de condensation dans des produits chauds.

8. Procédé selon la revendication 1, **caractérisé en ce qu'**un volume d'espace de la chambre à vide (8) est réduit par l'introduction d'un ou de plusieurs corps d'insertion (10) afin de réduire un volume d'air pour l'évacuation et le regazage par rapport au volume d'espace de la chambre à vide sans le corps d'insertion.

9. Procédé selon la revendication 8, **caractérisé en ce que** le ou les corps d'insertion (10) est/sont interchangeable(s) et peut/peuvent être utilisé(s) dans différentes dimensions afin d'adapter le volume d'espace de la chambre à vide (8) à différents produits (1) et différentes formations de produits (2).

10. Procédé selon l'une quelconque des revendications 1 ou 5 à 10, **caractérisé en ce que** le ou au moins l'un des corps d'insertion (10) est extensible et peut occuper un volume défini réglable.

11. Procédé selon l'une quelconque des revendications 1 ou 5 à 10, **caractérisé en ce que** la première et la deuxième bande de stockage (5a/b), le premier et le deuxième dispositif de levage (6a/b) et/ou le support de chambre (9) sont réalisés sous la forme de systèmes de transport fermés, par exemple sous la forme de bandes, de courroies ou de courroies, afin de recevoir, stocker, transporter et/ou distribuer les produits (1) et/ou la formation de produits (2).

12. Procédé selon l'une quelconque des revendications précédentes, dans lequel les produits (1) dans la formation de produits définie (2) présentent une distance définie dans la direction de la direction de déplacement de produits horizontale (17) qui est inférieure à une distance moyenne des produits (1) sur la bande d'entrée (3).

13. Procédé selon l'une quelconque des revendications précédentes, dans lequel la bande de pré-stockage (4) est conçue pour diviser les produits (1) de la bande d'entrée (3) dans une direction transversale à la direction de déplacement de produits (17), de sorte que la formation de produits définie (2) présente plus de rangées de produits (1) parallèlement à la direction de déplacement de produits (17) que le nombre maximal de rangées de produits (1) sur la bande d'entrée (3).

14. Procédé selon l'une quelconque des revendications précédentes, dans lequel les produits (1) transportés hors de la chambre à vide (8) baignent en continu dans un gaz protecteur à l'intérieur d'une enceinte (16b), par exemple le même gaz protecteur que celui avec lequel les produits (1) sont regazés dans la chambre à vide.

15. Dispositif d'évacuation de l'air ambiant et de regazage avec un gaz protecteur de produits (1) non emballés, par exemple des pâtes ou des aliments exposés à l'air, avec une seule chambre à vide, le dispositif présentant :
une bande d'entrée (3), une bande de pré-stockage (4), une première bande de stockage segmentée (5a), un premier dispositif de levage segmenté (6a), une chambre à vide (8), un support de chambre segmenté (9), des panneaux de fermeture avant et arrière (11a/11b), qui disposent d'unités de levage (12a/12b) dans des boîtiers de panneaux de fermeture (13a, 13b) pour fermer la chambre à vide (8) de manière étanche à l'avant et à l'arrière, un deuxième dispositif de levage segmenté (6b), une deuxième bande de stockage segmentée (5b) et une bande de sortie (14),
le dispositif étant conçu pour réaliser le procédé selon l'une quelconque des revendications précédentes.
